# EUROPÄISCHE PATENTSCHRIFT

(11) **EP 3 172 049 B1**
(45) Veröffentlichungstag und Bekanntmachung des Hinweises auf die Patenterteilung: **20.03.2019**
(21) Anmeldenummer: 15737999.1
(22) Anmeldetag: 24.06.2015
(51) Int. Cl.: B32B 37/00, B32B 37/06, B32B 37/08, B32B 37/20, B32B 15/08

(54) **VORRICHTUNG UND VERFAHREN ZUR HERSTELLUNG VON VERBUNDBLECHEN DURCH MEHRFACHKASCHIERUNG**
DEVICE AND METHOD FOR PRODUCING COMPOSITE SHEETS USING MULTIPLE LAMINATION
DISPOSITIF ET PROCÉDÉ DE PRODUCTION DE TÔLES COMPOSITES PAR CONTRE-COLLAGE MULTIPLE

(30) Priorität: 21.07.2014 DE 102014110252
(43) Veröffentlichungstag der Anmeldung: 31.05.2017
(73) Patentinhaber: ThyssenKrupp Steel Europe AG, 47166 Duisburg (DE); thyssenkrupp AG, 45143 Essen (DE)
(72) Erfinder: MÜHLHAUSE, Walter, 47608 Geldern (DE); KLEINSCHMIDT, Oliver, 44137 Dortmund (DE); KOCH, Klaus-Peter, 58332 Schwelm (DE); HEERMANN, Klemens, 46284 Dorsten (DE)
(74) Vertreter: thyssenkrupp Intellectual Property GmbH
(86) Internationale Anmeldenummer: PCT/EP2015/064200
(87) Internationale Veröffentlichungsnummer: WO 2016/012182

(56) Entgegenhaltungen:
- WO-A1-94/29106
- WO-A1-2010/108953
- US-A- 3 725 169

## Beschreibung

Die Erfindung betrifft eine Vorrichtung zur Herstellung eines bandförmigen Verbundblechs, welches mindestens zwei äußere metallische Deckbleche und mindestens eine zwischen Deckblechen angeordnete Kunststoffschicht aufweist, umfassend mindestens eine erste Kaschiervorrichtung zum Kaschieren der metallischen Deckbleche mit der zwischen den metallischen Deckblechen angeordneten, mindestens einen Kunststoffschicht zum Verbundblech, welche mindestens zwei, einen ersten Kaschierspalt bildende Kaschierwalzen aufweist.

Daneben betrifft die Erfindung ein Verfahren zur Herstellung eines bandförmigen Verbundblechs aufweisend mindestens zwei metallische Deckbleche und mindestens eine zwischen den Deckblechen angeordneten Kunststoffschicht, umfassend die folgenden Verfahrensschritte:
- Bereitstellen von mindestens zwei Metallbändern und mindestens einer Kunststofffolie durch Abwickelhaspeln,
- Vorwärmen der Metallbänder und der Kunststofffolie bevor diese einer ersten Kaschiervorrichtung mit einem durch zwei Kaschierwalzen gebildeten Kaschierspalt zugeführt werden,
- Kaschieren der mindestens zwei Metallbänder mit der zwischen den Metallbändern angeordneten, mindestens einen Kunststofffolie in der ersten Kaschiervorrichtung zu einem Verbundblech.

Verbundbleche bestehend aus zwei metallischen Deckblechen mit einer zwischen den metallischen Deckblechen angeordneten Kunststoffschicht, auch Sandwichbleche genannt, weisen gegenüber den beispielsweise üblicherweise im Kraftfahrzeugbau eingesetzten Stahlblechen aus Vollmaterial ein enormes Gewichtseinsparpotential auf. So hat beispielsweise ein Sandwichblech mit einer Schichtfolge Stahl/Kunststoff/Stahl und folgenden Dicken 0,5 mm/1 mm/0,5 mm gegenüber einer identischen monolithischen Variante mit einer Dicke von 1,91 mm nahezu gleiche Biegeeigenschaften. Das Verbundblech bzw. Sandwichblech hat jedoch ein bis zu 40% geringeres Gewicht. Um entsprechende Verbundbleche herzustellen, wurden bisher Kaschiervorrichtungen in Form von Doppelbandpressen verwendet, welche auch eine Kaschiervorrichtung aufweisen. Sowohl die für die metallischen Deckbleche bereitgestellten Metallbändern als auch die für die Kunststoffschicht bereitgestellte Kunststofffolie werden kontinuierlich der Doppelbandpresse zugeführt. In der Doppelbandpresse werden zunächst in einer Aufheizzone die Metallbänder und die Kunststofffolie auf Kaschiertemperatur gebracht, bevor diese in eine innerhalb der Doppelbandpresse angeordnete Kaschiervorrichtung geführt werden. Die in der Doppelbandpresse angeordnete Kaschiervorrichtung in Form eines Kalanders erzeugt durch den hohen Liniendruck die endgültige Haftung zwischen Metallblechen und Kunststoffschicht, wonach sich eine ebenfalls durch eine Doppelbandpresse gebildete Kühlzone anschließt, in der das bandförmige Verbundblech abgekühlt wird. Dabei können in der Kühlzone unterschiedliche Kühltemperaturen und Kühlraten eingestellt werden. In den Doppelbandpressen erfolgt der Wärmetransport sowohl in der Aufheizzone als auch in der Kühlzone durch einen direkten bzw. indirekten Kontakt mit Aluminiumplatten, welche mit der Bandgeschwindigkeit mitlaufen bzw. feststehend angeordnet sind. Damit die Oberfläche des Verbundblechs nicht beschädigt wird, ist ein mitlaufendes Transportband zwischen den feststehenden Aluminiumplatten und dem Verbundblech erforderlich. Es hat sich gezeigt, dass die Produktionsgeschwindigkeiten mit der entsprechenden, bekannten Vorrichtung bisher nicht ausreichen, um eine hohe Wirtschaftlichkeit in dem Herstellverfahren zu erzielen. Darüber hinaus ist es ein ständiges Bedürfnis, die Haftung zwischen Metallblechen und Kunststoffschicht zu vergrößern, um einer Delaminierung zwischen den Metall- und Kunststoffschichten, beispielsweise bei der Weiterverarbeitung der Verbundbleche vorzubeugen.

Aus der internationalen Patentanmeldung WO 2009/043777 A2 ist ein Verfahren zur Herstellung eines Verbundblechs mit zwei äußeren metallischen Deckblechen und einer zwischen den Deckblechen angeordneten Kunststoffschicht bekannt, bei welchen wie ausgeführt Doppelbandpressen zur Herstellung des Verbundblechs eingesetzt werden.

Von diesem Stand der Technik ausgehend liegt der vorliegenden Erfindung die Aufgabe zu Grunde, ein Verfahren und eine Vorrichtung zur Herstellung von Verbundblechen bereit zu stellen, mit welchen die Wirtschaftlichkeit, das heißt die Produktionsgeschwindigkeit, deutlich erhöht werden kann und zugleich die Delaminierungsgefahr der Verbundbleche bei der weiteren Verarbeitung verringert werden kann.

Gemäß einer ersten Lehre der vorliegenden Erfindung wird diese Aufgabe für eine gattungsgemäße Vorrichtung zur Herstellung eines bandförmigen Verbundblechs dadurch gelöst, dass in Prozessrichtung nach dem ersten Kaschierspalt eine erste Aufheizzone mit Erwärmungsmitteln zur erneuten Erwärmung des Verbundbleches nach dem ersten Kaschierschritt im ersten Kaschierspalt auf eine Kaschiertemperatur vorgesehen ist und eine zweite Kaschiervorrichtung in Prozessrichtung nach der ersten Aufheizzone angeordnet ist, welche einen durch mindestens zwei Kaschierwalzen gebildeten zweiten Kaschierspalt aufweist und nach dem zweiten Kaschierspalt eine Kühlzone angeordnet ist.

Bei der erfindungsgemäßen Vorrichtung besteht nicht mehr die Notwendigkeit, Doppelbandpressen für den eigentlichen Kaschiervorgang, d.h. Doppelbandpressen mit integrierter Kaschiervorrichtung einzusetzen, sodass die Produktionsgeschwindigkeit erhöht werden kann. Die Bereitstellung der Verbindung zwischen den metallischen Deckblechen und der Kunststoffschicht erfolgt durch die Kaschierwalzen sowohl der ersten Kaschiervorrichtung als auch der nachgeordneten zweiten Kaschiervorrichtung. Sowohl die erste Kaschiervorrichtung als auch die zweite Kaschiervorrichtung können mit höherer Produktionsgeschwindigkeit den Kaschierprozess zwischen den Metallblechen und der Kunststoffschicht durchführen.

Gemäß einer ersten Ausgestaltung der erfindungsgemäßen Vorrichtung sind jeweils eine Abwickelhaspel zum Abwickeln von mindestens zwei Metallbändern zur Bereitstellung der metallischen Deckbleche, mindestens eine Abwickelhaspel zum Abwickeln mindestens einer Kunststofffolie zur Bereitstellung der mindestens einen Kunststoffschicht sowie Mittel zum Vorwärmen der mindestens zwei Metallbänder und der mindestens einen Kunststofffolie vor dem ersten Kaschierschritt zum Verbundblech vorgesehen. Denkbar ist aber auch die Bereitstellung der Kunststoffschicht als Stückware. Über die Mittel zum Vorwärmen der mindestens zwei Metallbänder werden die Metallbänder vorzugsweise auf eine Temperatur von 100 °C bis 300 °C vorgewärmt. Die Kunststofffolie wird vorzugsweise auf eine Temperatur von 50 °C bis 150 °C vorgewärmt.

Bei der Vorwärmung der Metallbänder können diese induktiv, beispielsweise durch Querfeld- oder Längsfeldinduktion, konduktiv, beispielsweise durch eine Widerstandserwärmung zwischen zwei Rollen, mit einem Konvektionsofen und warmer Luft, einem Infrarotstrahler oder Nahinfrarotstrahler (NIR-Strahler), Linienlasern oder auch Laserdioden, unter Verwendung von Gasstrahlern bzw. -brennern, indirekt oder direkt oder über Kontakterwärmung über mitlaufende, beheizbare Rollen erwärmt werden. Beispielsweise tritt während des Vorwärmens keine plastische Verformung auf, um ein möglichst maßhaltiges Verbundblech herstellen zu können.

Die Kunststoffschicht wird beispielsweise über einen Konvektionsofen unter Verwendung von Warmluft, einem Infrarotstrahler oder Gasstrahlern, insbesondere indirekten Gasstrahlern, -brennern oder auch durch Kontakterwärmung über mitlaufende beheizbare Walzen auf Kaschiertemperatur gebracht.

Gemäß einer ersten alternativen Ausgestaltung der erfindungsgemäßen Vorrichtung sind mindestens eine Abwickelhaspel zum Abwickeln von mindestens einem Metallband zur Bereitstellung des mindestens einen metallischen Deckblechs, mindestens eine Abwickelhaspel zum Abwickeln von mindestens einem Metallband mit einer mindestens einseitig aufkaschierten Kunststofffolie sowie Mittel zum Vorwärmen des mindestens einen Metallbandes mit der mindestens einseitig aufkaschierten Kunststofffolie und des mindestens einen metallischen Metallbandes vor dem ersten Kaschierschritt zum Verbundblech vorgesehen. Durch diese alternative Ausführungsform kann der Kaschierschritt vereinfacht werden, da die Kunststofffolie bereits auf ein Metallband aufkaschiert wurde.

Gemäß einer zweiten alternativen Ausgestaltung der erfindungsgemäßen Vorrichtung sind jeweils ein Abwickelhaspel zum Abwickeln von mindestens zwei Metallbändern zur Bereitstellung der metallischen Deckbleche, mindestens ein Abwickelhaspel zum Abwickeln mindestens einer Kunststofffolie zur Bereitstellung der mindestens einen Kunststoffschicht sowie Mittel zum Vorwärmen des mindestens einen Metallbandes und der mindestens einen Kunststofffolie vor einem Aufkaschierschritt zum Erzeugen eines Metallbandes mit einer mindestens einseitig aufkaschierten Kunststofffolie vorgesehen. Nach dem Aufkaschierschritt sind in Prozessrichtung ferner Mittel zum Vorwärmen des mindestens einen Metallbandes mit der mindestens einseitig aufkaschierten Kunststofffolie und eines mindestens weiteren metallischen Metallbandes vor dem ersten Kaschierschritt zum Verbundblech vorgesehen.

Gemäß einer weiteren Ausgestaltung der erfindungsgemäßen Vorrichtung sind Mittel zum Erwärmen der metallischen Deckbleche des Verbundbleches nach dem ersten Kaschierspalt vorgesehen. Bevorzugt sind die Mittel zum Erwärmen der metallischen Deckbleche des Verbundbleches unmittelbar nach dem ersten Kaschierspalt vorgesehen, da es üblicherweise bei dem Kaschierprozess zu Spannungen im Verbundblech kommt. Beim Durchlaufen der Deckbleche und der Kunststofffolien durch den Kaschierspalt kommt es typischerweise zu temperaturbedingten Änderungen der Breite, insbesondere der Kunststoffschicht, sodass beim Erkalten des Verbundblechs Spannungen entstehen. Zur Vermeidung dieser Spannungen werden Mittel zum Erwärmen der metallischen Deckbleche des Verbundbleches nach dem ersten Kaschierspalt eingesetzt, welche gezielt die Deckbleche erwärmen.

Bevorzugt sind als Mittel zum Erwärmen der metallischen Deckbleche des Verbundbleches nach dem ersten Kaschierspalt radiative Erwärmungsmittel, Laser oder LEDs vorgesehen. Radiative und damit berührungslos arbeitende Erwärmungsmittel haben den Vorteil, dass diese nicht nur keine Schäden an den Oberflächen anrichten, sondern zudem sehr genau dosierte Energiemengen auf die metallischen Deckbleche von außen übertragen können. Vorzugsweise werden hier Linienlaser oder auch Laserdioden verwendet, sodass im Ergebnis eine sehr präzise Erwärmung der Deckbleche unmittelbar nach dem Austritt aus dem Kaschierspalt erfolgen kann. Andere radiative Erwärmungsmittel wie beispielsweise NIR-Strahler sind aber auch denkbar.

Gemäß einer weiteren Ausgestaltung der vorliegenden Erfindung ist in der ersten Aufheizzone ein Wärmetunnel vorgesehen, in welchem das Verbundblech radiativ, induktiv und/oder konvektiv auf die Kaschiertemperatur erwärmt wird. Radiative, induktive und konvektive Erwärmungen können in einem Wärmetunnel, das heißt in einem beispielsweise durch eine Einhausung abgeschlossenen Raumbereich eine in geeigneter Weise bzw. prozessspezifische Erwärmung des Verbundblechs gewährleisten, sodass dieses einem weiteren Kaschierschritt auch mit höherer Prozessgeschwindigkeit zugeführt werden kann.

Alternativ dazu kann in der ersten Aufheizzone auch eine Doppelbandpresse zur konduktiven Erwärmung des Verbundblechs vorgesehen sein. Die Doppelbandpresse arbeitet mit aufgelegten, temperierten Aluminiumplatten, welche die Wärme an das Verbundblech weitergeben. Um Oberflächenfehler zu vermeiden beziehungsweise eine Beschädigung der Oberfläche zu vermeiden, ist zwischen den Aluminiumplatten und der Oberfläche des Verbundblechs ein mitlaufendes Band angeordnet. Auch Doppelbandpressen können beim Aufheizen eine relativ hohe Produktionsgeschwindigkeit erreichen, sofern diese nicht zusätzlich einen Kaschierschritt durchführen sollen. Insofern gewährleistet auch eine Aufheizzone, welche gemäß der vorliegenden Ausführungsform eine Doppelbandpresse zur konduktiven Erwärmung sein kann, eine identisch hohe Produktionsgeschwindigkeit.

Gemäß einer weiteren Ausgestaltung der Vorrichtung ist nach dem zweiten Kaschierspalt eine Kühlzone angeordnet, wobei die Kühlzone als eine Doppelbandpresse, eine Luftkühlstrecke, eine Wassernebelkühlstrecke, eine Wasserkühlstrecke oder als eine Kombination der genannten Kühlstrecken ausgebildet ist. Die kontrollierte Abkühlung des bandförmigen Verbundblechs gewährleistet, dass das Verbundblech möglichst schnell den weiteren Verarbeitungsschritten, beispielsweise einem Konfektionieren zugeführt werden kann.

Der apparative Aufwand zur Bereitstellung der Mittel zum Vorwärmen der mindestens zwei Metallbänder kann gemäß einer weiteren Ausgestaltung dadurch reduziert werden, dass Bandführungsmittel für die Metallbänder vorgesehen sind, mit welchen die Metallbänder zum Vorwärmen durch die erste Aufheizzone des Verbundbleches nach dem ersten Kaschierspalt geführt werden können, sodass die Wärme in der Aufheizzone nach dem ersten Kaschierspalt auch zum Vorwärmen der Metallbänder vor dem ersten Kaschierschritt durchgeführt werden kann. Hier kann beispielsweise eine mehrere Aufheizbereiche aufweisende erste Aufheizzone verwendet werden, welche getrennte Aufheizbereiche für das Vorwärmen vor dem ersten Kaschieren und den Aufheizprozess nach dem ersten Kaschieren aufweist. Damit wird zusätzlich ein besonders kompakter Aufbau der erfindungsgemäßen Vorrichtung erzielt.

Gemäß einer weiteren Ausgestaltung sind die Mittel zum Vorwärmen der Kunststofffolie unmittelbar vor dem Kaschierspalt der ersten Kaschiervorrichtung angeordnet, so dass der Temperaturverlust bis zum Eintritt in den Kaschierspalt besonders klein ist, so dass besonders kontrollierte Kaschiertemperaturen der Kunststofffolie eingestellt werden und im Kaschierspalt gehalten werden können.

Ist in Prozessrichtung vor der Kühlzone mindestens eine weitere Aufheizzone mit einer ausgangsseitig der weiteren Aufheizzone angeordneten, weiteren Kaschiervorrichtung mit mindestens zwei einen Kaschierspalt bildenden Kaschierwalzen vorgesehen, kann die Haftung zwischen den Deckblechen und der dazwischen angeordneten Kunststoffschicht weiter gesteigert werden, indem auch zeitabhängige, die Haftwirkung verbessernde Prozesse durch die weitere Kaschiervorrichtung genutzt werden können. Insgesamt lässt sich trotz höherer Prozessgeschwindigkeit eine weitere Steigerung der Haftung zwischen den Metallblechen und der Kunststoffschicht erreichen.

Bevorzugt sind bei allen oder zumindest bei einer der verwendeten Kaschiervorrichtungen temperierbare Kaschierwalzen vorgesehen, da diese in Bezug auf das Kaschieren einen besonders kontrollierten Verbindungsaufbau gewährleisten können. Aufgrund der eingestellten Temperatur der Kaschierwalzen, welche beispielsweise der Temperatur der Deckbleche im Vorwärm- oder Aufheizprozess entspricht, lassen sich Relativbewegungen zwischen den Metallbändern und Kunststoffschicht vermeiden.

Gemäß einer zweiten Lehre der vorliegenden Erfindung wird die aufgezeigte Aufgabe mit einem Verfahren dadurch gelöst, dass das Verbundblech nach dem ersten Kaschierspalt in einer ersten Aufheizzone erneut auf eine Kaschiertemperatur erwärmt wird, in einer zweiten Kaschiervorrichtung, welche mindestens zwei einen Kaschierspalt bildende Kaschierwalzen aufweist, einem zweiten Kaschierschritt unterzogen wird und in einer Kühlzone abgekühlt wird. Wie bereits zuvor ausgeführt, kann die Prozessgeschwindigkeit durch die Aufteilung in einen ersten Kaschierschritt, einem Vorkaschierschritt und in einen zweiten Kaschierschritt deutlich angehoben werden. Durch die kontrollierte Abkühlung in der Kühlzone wird zudem erreicht, dass das Verbundblech unmittelbar nach dessen Herstellung einem Weiterverarbeitungsschritt, beispielsweise einem Zuschneiden oder Konfektionieren zugeführt werden kann.

Werden die metallischen Deckbleche des metallischen Verbundblechs nach dem Durchlauf durch den ersten Kaschierspalt radiativ erwärmt, können die Deckbleche beispielsweise unmittelbar am Auslauf des ersten Kaschierspaltes erwärmt werden, sodass Spannungen im Verbundblech, welche auf Grund von Temperaturdifferenzen zwischen den metallischen Bändern und der Kunststoffschicht entstehen, vermieden beziehungsweise ausgeglichen werden. Als radiative Erwärmungsmittel werden beispielsweise Laser, insbesondere Linienlaser oder LEDs verwendet. Beide Erwärmungsmittel können sehr präzise spezifische Bereiche der metallischen Deckbleche mit einer beispielsweise auf das Absorptionsverhalten der metallischen Deckbleche abgestimmten Wellenlänge erwärmen. Die Erwärmung kann räumlich besonders präzise eingebracht werden, wenn Laser, beispielsweise Laserdioden oder Linienlaser verwendet werden. Denkbar ist aber auch der Einsatz von IR- bzw. NIR-Strahlern ausgangsseitig des Kaschierspaltes. Eine Erwärmung der Deckbleche kann beispielsweise auch hinter jeder Kaschiervorrichtung im Herstellverfahren erfolgen.

Durchläuft gemäß einer weiteren Ausgestaltung des Verfahrens das Verbundblech nach dem zweiten Kaschierschritt mindestens eine weitere Aufheizzone mit einer ausgangsseitig der weiteren Aufheizzone angeordneten weiteren Kaschiervorrichtung bevor das Verbundblech in der Kühlzone gekühlt wird, kann der Kaschierprozess beispielsweise auf insgesamt drei oder mehr Kaschierschritte aufgeteilt werden. Hierdurch kann einerseits das Haftvermögen zwischen den Metallblechen und der Kunststoffschicht und die Produktionsgeschwindigkeit gesteigert werden.

Werden die mindestens zwei Metallbänder gemäß einer weiteren Ausgestaltung des Verfahrens zum Vorwärmen durch die erste Aufheizzone, welche nach dem ersten Kaschierspalt vorgesehen ist, geführt und im ersten Kaschierspalt zu einem Verbundblech kaschiert, kann nicht nur ein kompakter Aufbau der Vorrichtung gewährleistet werden, sondern auch durch die Nutzung der Energie der ersten Aufheizzone ein energetisch günstiges Verfahren bereitgestellt werden.

Wird die mindestens eine Kunststofffolie unmittelbar vor dem Einlauf in den ersten Kaschierspalt über Erwärmungsmittel, vorzugsweise auf eine Temperatur zwischen 50 °C und 150 °C erwärmt, kann nicht nur ein besonders kontrollierter Kaschierprozess auf Grund des verringerten Wärmeverlusts der Kunststofffolie erreicht werden, sondern auch die Gefahr eines Reißens der Kunststofffolie verringert werden, da die Länge, in welcher die Kunststofffolie die erhöhte Temperatur aufweist, so minimiert werden kann. Die Metallbänder werden vorzugsweise auf eine Temperatur von 100 °C bis 300 °C vorgeheizt bzw. erneut erwärmt, um ein optimales Kaschieren der Kunststoffschicht zu ermöglichen.

Bevorzugt werden gemäß einer Ausgestaltung des Verfahrens mindestens zwei Kaschierwalzen eines Kaschierspalts auf die Temperatur der erwärmten Metallbänder vor dem jeweiligen Kaschierschritt temperiert. Hierdurch wird erreicht, dass die Wärme der Metallbänder nicht über die Kaschierwalzen abfließen kann, sondern lediglich über die zwischen den beiden Metallbändern angeordnete Kunststofffolie. Im Ergebnis ist der Kaschierschritt bei Verwendung entsprechend temperierter Kaschierwalzen sehr kontrolliert.

Im Weiteren soll die Erfindung anhand von Ausführungsbeispielen in Verbindung mit der Zeichnung näher erläutert werden. Die Zeichnung zeigt in
- Fig. 1: ein erstes Ausführungsbeispiel einer Vorrichtung zur Herstellung eines Verbundblechs mit zwei Kaschiervorrichtungen in einer schematischen Schnittansicht und
- Fig. 2: ein zweites Ausführungsbeispiel einer Vorrichtung zur Herstellung eines Verbundblechs mit mindestens zwei Kaschiervorrichtungen in einer schematischer Schnittansicht.

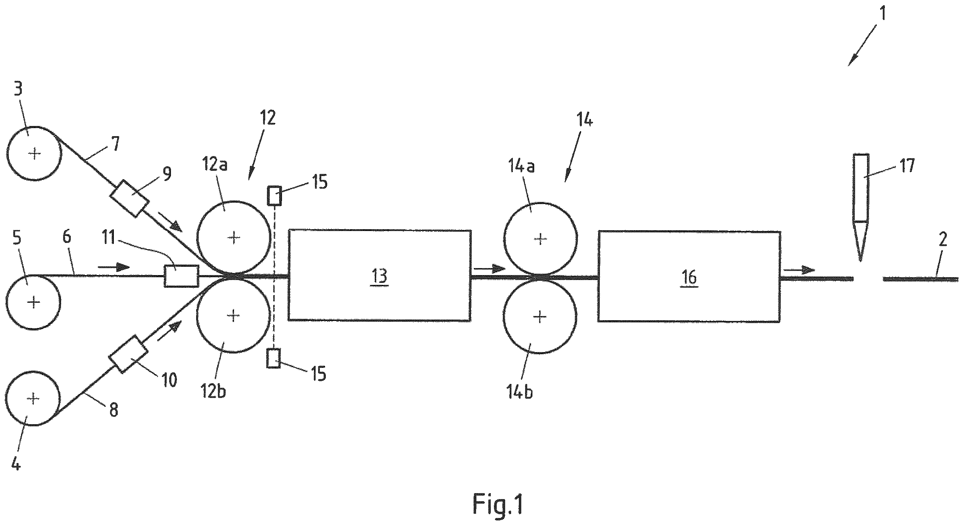

Figur 1 zeigt in einer schematischen Schnittansicht eine Vorrichtung 1 zur Herstellung eines bandförmigen Verbundbleches 2, wobei das Verbundblech mindestens zwei äußere metallische Deckbleche und mindestens eine zwischen den Deckblechen angeordnete Kunststoffschicht aufweist. Die metallischen Deckbleche werden als Metallbänder 7, 8 über die Abwickelhaspeln 3 und 4 und die Kunststoffschicht durch eine Kunststofffolie 6 über die Abwickelhaspel 5 bereitgestellt. Die Metallbänder 7, 8 werden Mitteln zum Vorwärmen 9, 10 zugeführt, welche die Metallbänder beispielsweise induktiv, konduktiv, konvektiv und/oder radiativ erwärmen. Die konduktive Erwärmung kann dabei sowohl unter Verwendung von elektrischem Strom als auch durch direkten Wärmekontakt, also über Wärmeleitung erfolgen. Auch die Kunststofffolie 6 wird Mitteln 11 zur Vorwärmung vor dem ersten Kaschierschritt zugeführt, welche vorzugsweise unmittelbar in der Nähe des Kaschierspaltes der ersten Kaschiervorrichtung 12 angeordnet sind.

Die Vorwärmung der Kunststofffolie erfolgt beispielsweise konvektiv, radiativ oder konduktiv über direkten Wärmekontakt, beispielsweise unter Verwendung temperierter Kontaktwalzen. Die vorgewärmten Metallbänder 7, 8 sowie die vorgewärmte Kunststofffolie 6 werden der ersten Kaschiervorrichtung 12 zugeführt, welche zwei einen Kaschierspalt bildende Kaschierwalzen 12a, 12b aufweist. Über den Abstand der Kaschierwalzen 12a und 12b, das heißt durch den Kaschierspalt kann der Kaschierdruck für die beiden Metallbänder 7, 8 und die Kunststofffolie 6 eingestellt werden. Als Kunststoffe eignen sich insbesondere thermoplastische Kunststoffe, beispielsweise ein Blend aus einem Polyamid und einem Polyethylen. Auch faserverstärkte Kunststoffe können verwendet werden. Vorzugsweise sind die Kunststoffe temperaturfest bis zu 200 °C, um beispielsweise nachgelagerte Lackier- und Trocknungsschritte ohne Verformung oder andere Veränderung zu überstehen. Die Metallbänder bestehen vorzugsweise aus einem Stahl und weisen z. B. eine Dicke von 0,1 mm bis 0,8 mm auf. Unterschiedliche Stahllegierung und/oder Dicken sowie Kombinationen mit anderen oder anderer Werkstoffe wie beispielsweise Aluminiumlegierungen und/oder Magnesiumlegierung können ebenfalls verwendet werden. Die Kunststoffschicht des fertigen Verbundblechs ist beispielsweise 0,3 mm bis 2,5 mm dick.

Die in Figur 1 dargestellte Vorrichtung weist in Prozessrichtung hinter der ersten Kaschiervorrichtung 12 eine erste Aufheizstrecke 13 auf, an deren Ausgang eine zweite Kaschiervorrichtung 14 angeordnet ist. In der Aufheizzone 13 wird das Verbundblech in geeigneter Weise bzw. verfahrensspezifisch wieder auf eine Kaschiertemperatur, beispielsweise 100°C bis 300 °C erwärmt und in dem durch die beiden Kaschierwalzen 14a, 14b gebildeten Kaschierspalt erneut kaschiert. Hierdurch wird die Haftung zwischen den Metallbändern 7, 8 und der Kunststoffschicht bestehend aus der Kunststofffolie 6 weiter erhöht.

Gleichzeitig werden keine Doppelbandpressen zur Bereitstellung der Verbindung beider Werkstoffe, Metall und Kunststoff, verwendet, denn die Verbindung wird in den Kaschierspalten jeweils erzeugt. Im Ergebnis nimmt die Produktionsgeschwindigkeit deutlich zu. Die Aufheizzone 13 erwärmt das Verbundblech 2 nach dem Durchlauf durch die erste Kaschiervorrichtung 12 in der Regel konvektiv, radiativ oder über eine Kontakterwärmung, beispielsweise mit beheizbaren Walzen. Zusätzlich können Mittel 15 zum Erwärmen der metallischen Deckbleche des Verbundblechs nach dem ersten Kaschierspalt vorgesehen sein, welche in dem vorliegenden Beispiel als Laserstrahlquelle, beispielsweise Diodenlaser oder Linienlaser ausgebildet sind.

Die Mittel 15 zum Erwärmen der metallischen Deckbleche unmittelbar nach dem ersten Kaschierschritt beziehungsweise nach der Kaschiervorrichtung 12 ermöglichen es, dass die metallischen Deckschichten 7, 8 erneut erwärmt werden und so Spannungen, welche durch die Kaschiervorrichtung 12 in das Verbundblech eingebracht wurden, kompensiert oder behoben werden können. Die zusätzliche Erwärmung der Metallbänder 7, 8 über die Erwärmungsmittel 15 führt zu einem Wärmefluss aus den metallischen Bändern in die Kunststoffschicht 6, sodass ein Ausgleich der Spannungen auf Grund unterschiedlicher Temperaturen von Metallband 7, 8 und Kunststoffschicht 6 erfolgt. Unterstützend wirken hier zusätzlich temperierte Kaschierwalzen 12a, 12b, welche vorzugsweise auf Metallbandtemperatur temperiert werden.

Nachdem das Verbundblech den zweiten Kaschierschritt in der Kaschiervorrichtung 14 durchlaufen hat, wird das noch bandförmige Verbundblech in einer Kühlzone 16 kontrolliert abgekühlt und einer Weiterverarbeitungsstation 17 zugeführt, welche Verbundbleche 2 aus dem Band herausschneidet. Ebenso ist ein Aufhaspeln des bandförmigen Verbundblechs denkbar. Wie in Figur 1 angedeutet ist die erste Aufheizzone als Wärmetunnel ausgebildet und erwärmt das Verbundblech radiativ, induktiv und/oder konvektiv auf eine Kaschiertemperatur, beispielsweise im Bereich von 100 °C bis 300°C.

Die Kühlzone 16 kann beispielsweise auch als Doppelbandpresse, Luftkühlstrecke, Wassernebelkühlstrecke oder Wasserkühlstrecke beziehungsweise als eine Kombination der genannten Kühlstrecken ausgebildet sein. Hierdurch wird das Blech nach dessen Produktion auf eine Temperatur herabgekühlt, in welcher das Verbundblech ohne Weiteres weiter verarbeitet werden kann, beispielsweise durch eine Konfektionierungsvorrichtung 17.

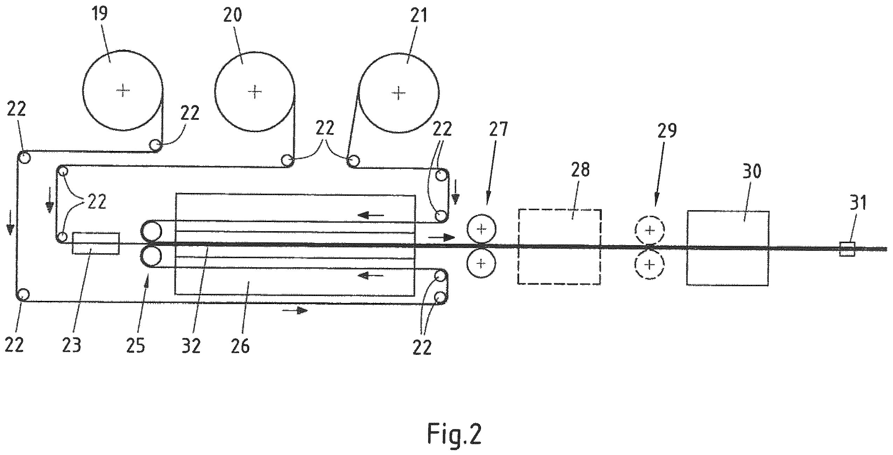

Figur 2 zeigt nun ein weiteres Ausführungsbeispiel einer Vorrichtung, welche zunächst Abwickelhaspeln 19, 20 und 21 jeweils für die Metallbänder beziehungsweise die Kunststofffolie aufweist. Von der Abwickelhaspel 20 wird eine Kunststofffolie abgewickelt und über Bandführungsmittel 22 einer Vorwärmung 23 zugeführt, welche unmittelbar vor der ersten Kaschiervorrichtung 25 angeordnet ist. Durch diese Anordnung der Vorwärmung der Kunststofffolie lässt sich erreichen, dass die Kunststofffolie mit einer besonders genau kontrollierten Temperatur dem ersten Kaschierschritt unterzogen werden kann.

Die Metallbänder werden von den Abwickelhaspeln 19 und 21 abgewickelt und über Bandführungsmittel 22 durch die Aufheizzone 26 der Vorrichtung geführt und gleichzeitig mit dem Verbundblech auf Kaschiertemperatur erwärmt. Die Metallbänder werden nach Austritt aus der Aufheizzone 26 in den ersten Kaschierspalt der ersten Kaschiervorrichtung 25 gemeinsam mit der Kunststofffolie von der Abwickelhaspel 20 geführt und dort zu einem bandförmigen Verbundblech 32 verbunden. Hierdurch wird ein besonders kompakter Aufbau der Vorrichtung zur Herstellung eines Verbundbleches erreicht, da insbesondere auf eine zusätzliche Vorwärmstrecke für die Metallbänder verzichtet werden kann. Nach dem ersten Kaschierschritt in der ersten Kaschiervorrichtung 25 durchläuft das Verbundblech die Aufheizzone 26 in Richtung einer weiteren Kaschiervorrichtung 27. Am Ende der ersten Aufheizzone 26 weist das Verbundblech eine Kaschiertemperatur auf, die zwischen 100 °C und 300°C liegt. Das Verbundblech 32 wird erneut kaschiert.

Anschließend durchläuft das Verbundblech beispielsweise eine Doppelbandpresse 28, die als zweite Aufheizzone ausgebildet ist, welche das Verbundblech erneut auf Kaschiertemperatur erwärmt. Eine weitere Kaschiervorrichtung 29 ausgangsseitig der zweiten Aufheizzone 28 führt einen weiteren Kaschierschritt durch und erhöht die Haftung zwischen den Deckblechen und der Kunststoffschicht. Es werden damit insbesondere auch zeitabhängige Haftmechanismen während der Herstellung der Verbundbleche verwendbar zur Verbesserung der Haftung zwischen Metallbändern und Kunststoffschicht. Ausgangsseitig der dritten Kaschiervorrichtung 29 ist beispielsweise eine ebenfalls als Doppelbandpresse ausgebildete Kühlzone 30 vorgesehen, welche das Band kontrolliert auf Verarbeitungstemperatur kühlt, sodass das bandförmige Verbundblech 32 an der Arbeitsstation 31 beispielsweise in Bleche konfektioniert oder als Coil aufgehaspelt werden kann. Auf die zweite Aufheizzone 28 und die dritte Kaschiervorrichtung 29 kann bei Bedarf verzichtet, daher sind sie in der Figur 2 als Strichlinien gezeigt.

Vorzugsweise sind die in den Kaschiervorrichtungen 25, 27, 29 vorgesehenen Kaschierwalzen temperiert und zwar auf die Temperatur der metallischen Deckbleche beziehungsweise der Metallbänder, sodass ein Wärmeabtransport aus den Metallbändern in Richtung Kaschierwalzen nicht erfolgt. Hierdurch kann die Temperaturdifferenz zwischen den Metallbändern und der Kunststofffolie während des Kaschierprozesses gering gehalten werden, sodass der Kaschierprozess insgesamt kontrollierter wird. Durch die beispielsweise drei Kaschierschritte in der ersten, zweiten und optional dritten Kaschiervorrichtung ist es möglich, die Produktionsgeschwindigkeit anzuheben und eine erhöhte Verarbeitungsgeschwindigkeit zu erzielen. Hierdurch wird es möglich, Verbundbleche mit mindestens zwei metallischen Deckblechen und einer zwischen den Deckblechen angeordneten Kunststoffschicht auf wirtschaftliche Weise herzustellen.

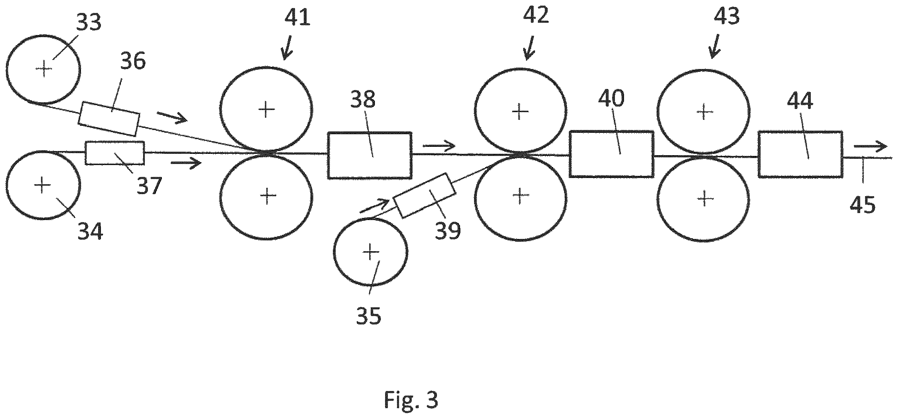

In Figur 3 ist ein weiteres Ausführungsbeispiel einer Vorrichtung gezeigt, welche zunächst Abwickelhaspeln 33, 34 und 35 jeweils für die Metallbänder und für die Kunststofffolie aufweist. Von den Abwickelhaspeln 33 und 34 werden zunächst ein Metallband und Kunststofffolie abgehaspelt und Mitteln zum Vorwärmen 36, 37 zugeführt. Das vorgewärmte Metallband und die vorgewärmte Kunststofffolie werden einer einen Kaschierspalt aufweisenden Kaschiervorrichtung 41 zugeführt, um in einem Aufkaschierschritt ein Metallband mit mindestens einer einseitig aufkaschierten Kunststofffolie zu erzeugen. In Prozessrichtung wird das Metallband mit mindestens einer einseitig aufkaschierten Kunststofffolie Mitteln 38 zum Vorwärmen zugeführt. Von dem Abwickelhaspel 35 wird ein weiteres Metallband abgehaspelt und Mitteln 39 zum Vorwärmen zugeführt, bevor das Metallband einer einen Kaschierspalt aufweisenden Kaschiervorrichtung 42 zugeführt wird, wobei das Metallband zusammen mit dem vorgewärmten Metallband, welches mindestens eine einseitig aufkaschierte Kunststofffolie aufweist, in die Kaschiervorrichtung 42 eingeführt wird, um in einem ersten Kaschierschritt ein Verbundblech 45 zu erzeugen. Nach der ersten Kaschiervorrichtung 42 folgt in Prozessrichtung eine Aufheizzone 40, an deren Ausgang zweite Kaschiervorrichtung 43 angeordnet ist. In der Aufheizzone 40 wird das Verbundblech 45 in geeigneter Weise bzw. verfahrensspezifisch wieder auf eine Kaschiertemperatur, beispielsweise 100°C bis 300 °C erwärmt und in der Kaschiervorrichtung 43 erneut kaschiert. Hierdurch wird die Haftung zwischen den Metallbändern und der Kunststofffolie weiter erhöht.

Nachdem das Verbundblech den zweiten Kaschierschritt in der Kaschiervorrichtung 43 durchlaufen hat, wird das noch bandförmige Verbundblech in einer Kühlzone 44 kontrolliert abgekühlt und einer nicht dargestellten Weiterverarbeitungsstation zugeführt, welche beispielsweise Verbundbleche aus dem Band herausschneidet. Ebenso ist ein Aufhaspeln des bandförmigen Verbundblechs denkbar.

## Patentansprüche

1. Vorrichtung (1) zur Herstellung eines bandförmigen Verbundblechs (2, 32, 45), welches mindestens zwei äußere metallische Deckbleche und mindestens eine zwischen den Deckblechen angeordnete Kunststoffschicht aufweist, umfassend mindestens eine erste Kaschiervorrichtung (12, 25, 42) zum Kaschieren der metallischen Deckbleche mit zwischen den metallischen Deckblechen angeordneten, mindestens einer Kunststofffolie, welche mindestens zwei, einen ersten Kaschierspalt bildende Kaschierwalzen (12a,12b, 25, 42) aufweist, wobei in Prozessrichtung nach dem ersten Kaschierspalt eine erste Aufheizzone (13, 26, 40) mit Erwärmungsmitteln zur erneuten Erwärmung des Verbundbleches (2, 32, 45) nach dem ersten Kaschierschritt im ersten Kaschierspalt auf eine Kaschiertemperatur vorgesehen ist und eine zweite Kaschiervorrichtung (14, 27, 43) in Prozessrichtung nach der ersten Aufheizzone (13, 26, 40) angeordnet ist, welche einen durch mindestens zwei Kaschierwalzen (14a, 14b, 27, 40) gebildeten zweiten Kaschierspalt aufweist und nach dem zweiten Kaschierspalt eine Kühlzone (16, 30, 44) angeordnet ist.

2. Vorrichtung nach Anspruch 1,
**dadurch gekennzeichnet, dass**
- jeweils eine Abwickelhaspel (3, 4, 19, 21, 33, 35) zum Abwickeln von mindestens zwei Metallbändern (7, 8) zur Bereitstellung der metallischen Deckbleche,
- mindestens eine Abwickelhaspel (5, 20, 34) zum Abwickeln mindestens einer Kunststofffolie (6) zur Bereitstellung der mindestens einen Kunststoffschicht und
- Mittel (9, 10, 11, 23, 26, 36, 37, 39) zum Vorwärmen der mindestens zwei Metallbänder (7, 8) und der mindestens einen Kunststofffolie (6) vor einem ersten Kaschierschritt vorgesehen sind.

3. Vorrichtung nach Anspruch 1,
**dadurch gekennzeichnet, dass**
- mindestens eine Abwickelhaspel zum Abwickeln von mindestens einem Metallband zur Bereitstellung des mindestens einen metallischen Deckblechs,
- mindestens eine Abwickelhaspel zum Abwickeln von mindestens einem Metallband mit einer mindestens einseitig aufkaschierten Kunststofffolie,
- Mittel zum Vorwärmen des mindestens einen Metallbandes mit der mindestens einseitig aufkaschierten Kunststofffolie und des mindestens einen metallischen Metallbandes vor dem ersten Kaschierschritt zum Verbundblech vorgesehen sind.

4. Vorrichtung nach Anspruch 1,
**dadurch gekennzeichnet, dass**
- jeweils eine Abwickelhaspel (33, 35) zum Abwickeln von mindestens zwei Metallbändern zur Bereitstellung der metallischen Deckbleche,
- mindestens eine Abwickelhaspel (34) zum Abwickeln mindestens einer Kunststofffolie zur Bereitstellung der mindestens einen Kunststoffschicht,
- Mittel zum Vorwärmen (36, 37) des mindestens einen Metallbandes und der mindestens einen Kunststofffolie vor einem Aufkaschierschritt zum Erzeugen eines Metallbandes mit einer mindestens einseitig aufkaschierten Kunststofffolie,
- in Prozessrichtung nach dem Aufkaschierschritt Mittel zum Vorwärmen (38, 39) des mindestens einen Metallbandes mit der mindestens einseitig aufkaschierten Kunststofffolie und eines mindestens weiteren metallischen Metallbandes vor dem ersten Kaschierschritt zum Verbundblech vorgesehen sind.

5. Vorrichtung nach einem der Ansprüche 1 bis 4,
**dadurch gekennzeichnet, dass**
Mittel (15) zum Erwärmen der metallischen Deckbleche des Verbundbleches (2, 32, 45) nach dem ersten Kaschierspalt vorgesehen sind.

6. Vorrichtung nach einem der Ansprüche 1 bis 5,
**dadurch gekennzeichnet, dass**
in der ersten Aufheizzone (13, 26, 40) ein Wärmetunnel vorgesehen ist, in welchem das Verbundblech (2, 32, 45) radiativ, induktiv und/oder konvektiv auf die Kaschiertemperatur erwärmt wird.

7. Vorrichtung nach einem der Ansprüche 1 bis 6,
**dadurch gekennzeichnet, dass** die Kühlzone (16, 30, 44) als eine Doppelbandpresse, eine Luftkühlstrecke, eine Wassernebelkühlstrecke, eine Wasserkühlstrecke oder als eine Kombination der genannten Kühlstrecken ausgebildet ist.

8. Vorrichtung nach einem der Ansprüche 1 bis 7,
**dadurch gekennzeichnet, dass**
Bandführungsmittel (22) für die Metallbänder vorgesehen sind, mit welchen diese zum Vorwärmen durch die erste Aufheizzone (26) des Verbundbleches (32) nach dem ersten Kaschierspalt geführt werden können.

9. Vorrichtung nach einem der Ansprüche 1 bis 8,
**dadurch gekennzeichnet, dass**
die Mittel (11, 23) zum Vorwärmen der Kunststofffolie unmittelbar vor dem Kaschierspalt der ersten Kaschiervorrichtung (12, 25) angeordnet sind.

10. Vorrichtung nach einem der Ansprüche 1 bis 9,
**dadurch gekennzeichnet, dass**
in Prozessrichtung vor der Kühlzone (30) mindestens eine weitere Aufheizzone (28) mit einer ausgangseitig der weiteren Aufheizzone (28) angeordneten weiteren Kaschiervorrichtung (29) mit mindestens zwei einen Kaschierspalt bildenden Kaschierwalzen vorgesehen ist.

11. Verfahren zur Herstellung eines bandförmigen Verbundbleches aufweisend mindestens zwei metallische Deckbleche und eine zwischen den Deckblechen angeordnete Kunststoffschicht, umfassend die folgenden Verfahrensschritte:
- Bereitstellen von mindestens zwei Metallbändern und mindestens einer Kunststofffolie durch Abwickelhaspeln,
- Vorwärmen der Metallbänder und der Kunststofffolie bevor diese einer ersten Kaschiervorrichtung mit einem durch zwei Kaschierwalzen gebildeten Kaschierspalt zugeführt werden,
- Kaschieren der mindestens zwei Metallbänder mit der zwischen den Metallbändern angeordneten mindestens einen Kunststofffolie in der ersten Kaschiervorrichtung zu einem Verbundblech, insbesondere unter Verwendung einer Vorrichtung nach einem der Ansprüche 1 bis 10,
wobei das Verbundblech nach dem ersten Kaschierspalt in einer ersten Aufheizzone erneut auf eine Kaschiertemperatur erwärmt wird, in einer zweiten Kaschiervorrichtung, welche mindestens zwei einen Kaschierspalt bildende Kaschierwalzen aufweist, einem zweiten Kaschierschritt unterzogen wird und in einer Kühlzone abgekühlt wird.

12. Verfahren nach Anspruch 11,
**dadurch gekennzeichnet, dass**
die metallischen Deckbleche des Verbundbleches nach dem Durchlauf durch den ersten Kaschierspalt radiativ erwärmt werden.

13. Verfahren nach Anspruch 11 oder 12,
**dadurch gekennzeichnet, dass**
das Verbundblech nach dem zweiten Kaschierschritt mindestens eine weitere Aufheizzone mit einer ausgangsseitig der weiteren Aufheizzone angeordneten weiteren Kaschiervorrichtung durchläuft bevor das Verbundblech in der Kühlzone gekühlt wird.

14. Verfahren nach einem der Ansprüche 11 bis 13,
**dadurch gekennzeichnet, dass**
die mindestens zwei Metallbänder zum Vorwärmen durch die erste Aufheizzone, welche nach dem ersten Kaschierspalt vorgesehen ist, geführt werden und im ersten Kaschierspalt zu einem Verbundblech kaschiert werden.

15. Verfahren nach einem der Ansprüche 11 bis 14,
**dadurch gekennzeichnet, dass**
die mindestens eine Kunststofffolie unmittelbar vor dem Einlauf in den ersten Kaschierspalt über Erwärmungsmittel, vorzugsweise auf eine Temperatur zwischen 50 °c und 150 °C erwärmt wird.

## Claims

1. Device (1) for producing a strip-shaped composite sheet (2, 32, 45) which comprises at least two outer metal cover sheets and at least one plastics layer arranged between the cover sheets, comprising at least one first laminating device (12, 25, 42) for laminating the metal cover sheets with at least one plastics film arranged between the metal cover sheets, said laminating device comprising at least two laminating rolls (12a,12b, 25, 42) forming a first laminating gap, wherein, in the process direction downstream of the first laminating gap, a first heating up zone (13, 26, 40) is provided with heating means for reheating the composite sheet (2, 32, 45) after the first laminating step in the first laminating gap to a laminating temperature, and a second laminating device (14, 27, 43) is arranged in the process direction downstream of the first heating up zone (13, 26, 40), said laminating device comprising a second laminating gap formed by at least two laminating rolls (14a, 14b, 27, 40), and a cooling zone (16, 30, 44) is arranged downstream of the second laminating gap.

2. Device according to Claim 1, **characterized in that**
- a respective unwinding reel (3, 4, 19, 21, 33, 35) is provided for unwinding at least two metal strips (7, 8) in order to provide the metal cover sheets,
- at least one unwinding reel (5, 20, 34) is provided for unwinding at least one plastics film (6) in order to provide the at least one plastics layer, and
- means (9, 10, 11, 23, 26, 36, 37, 39) are provided for preheating the at least two metal strips (7, 8) and the at least one plastics film (6) before a first laminating step.

3. Device according to Claim 1, **characterized in that**
- at least one unwinding reel is provided for unwinding at least one metal strip in order to provide the at least one metal cover sheet,
- at least one unwinding reel is provided for unwinding at least one metal strip with a plastics film laminated thereon at least on one side,
- means are provided for preheating the at least one metal strip with the plastics film laminated thereon at least on one side and the at least one metal strip before the first laminating step to form the composite sheet.

4. Device according to Claim 1, **characterized in that**
- a respective unwinding reel (33, 35) is provided for unwinding at least two metal strips in order to provide the metal cover sheets,
- at least one unwinding reel (34) is provided for unwinding at least one plastics film in order to provide the at least one plastics layer,
- means are provided for preheating (36, 37) the at least one metal strip and the at least one plastics strip before a laminating-on step in order to produce a metal strip with a plastics film laminated thereon at least on one side,
- in the process direction downstream of the laminating-on step, means are provided for preheating (38, 39) the at least one metal strip with the plastics film laminated thereon at least on one side and at least one further metal strip before the first laminating step to form the composite sheet.

5. Device according to one of Claims 1 to 4, **characterized in that** means (15) are provided for heating the metal cover sheets of the composite sheet (2, 32, 45) downstream of the first laminating gap.

6. Device according to one of Claims 1 to 5, **characterized in that** a heat tunnel in which the composite sheet (2, 32, 45) is radiatively, inductively and/or convectively heated to the laminating temperature is provided in the first heating up zone (13, 26, 40).

7. Device according to one of Claims 1 to 6, **characterized in that** the cooling zone (16, 30, 44) is designed as a double belt press, an air cooling section, a water mist cooling section, a water cooling section or a combination of the cooling sections mentioned.

8. Device according to one of Claims 1 to 7, **characterized in that** strip-guiding means (22) are provided for the metal strips, with which said metal strips can be guided for preheating through the first heating up zone (26) of the composite sheet (32) downstream of the first laminating gap.

9. Device according to one of Claims 1 to 8, **characterized in that** the means (11, 23) for preheating the plastics film are arranged directly upstream of the laminating gap of the first laminating device (12, 25).

10. Device according to one of Claims 1 to 9, **characterized in that** at least one further heating up zone (28) with a further laminating device (29) which is arranged on the output side of the further heating up zone (28) and has at least two laminating rolls forming a laminating gap is provided upstream of the cooling zone (30) in the process direction.

11. Method for producing a strip-shaped composite sheet comprising at least two metal cover sheets and a plastics layer arranged between the cover sheets, comprising the following method steps:
- providing at least two metal strips and at least one plastics film by means of unwinding reels,
- preheating the metal strips and the plastics film before they are supplied to a first laminating device with a laminating gap formed by two laminating rolls,
- laminating the at least two metal strips with the at least one plastics film arranged between the metal strips in the first laminating device to form a composite sheet, in particular using a device according to one of Claims 1 to 10,
wherein the composite sheet is heated again in a first heating up zone downstream of the first laminating gap to a laminating temperature, is subjected in a second laminating device, which comprises at least two laminating rolls forming a laminating gap, to a second laminating step and is cooled in a cooling zone.

12. Method according to Claim 11, **characterized in that** the metal cover sheets of the composite sheet are radiatively heated after passing through the first laminating gap.

13. Method according to Claim 11 or 12, **characterized in that**, after the second laminating step, the composite sheet passes through at least one further heating up zone with a further laminating device arranged on the output side of the further heating up zone, before the composite sheet is cooled in the cooling zone.

14. Method according to one of Claims 11 to 13, **characterized in that** the at least two metal strips are guided for preheating through the first heating up zone, which is provided downstream of the first laminating gap, and are laminated in the first laminating gap to form a composite sheet.

15. Method according to one of Claims 11 to 14, **characterized in that** the at least one plastics film is heated, preferably to a temperature of between 50°C and 150°C, by heating means directly before entry into the first laminating gap.

## Revendications

1. Dispositif (1) de fabrication d'une tôle composite en forme de bande (2, 32, 45), qui présente au moins deux tôles de recouvrement métalliques extérieures et au moins une couche de plastique disposée entre les tôles de recouvrement, comprenant au moins un premier dispositif de contre-collage (12, 25, 42) pour le contre-collage des tôles de recouvrement métalliques avec au moins un film en plastique disposé entre les tôles de recouvrement métalliques, qui présente au moins deux rouleaux de contre-collage (12a, 12b, 25, 42) formant une fente de contre-collage, une première zone de chauffage (13, 26, 40) dans la direction de processus après la première fente de contre-collage étant pourvue de moyens de chauffage pour chauffer à nouveau la tôle composite (2, 32, 45) entre la première étape de contre-collage dans la première fente de contre-collage à une température de contre-collage et un deuxième dispositif de contre-collage (14, 27, 43) étant disposé dans la direction de processus après la première zone de chauffage (13, 26, 40), lequel présente une deuxième fente de contre-collage formée par au moins deux rouleaux de contre-collage (14a, 14b, 27, 40) et une zone de refroidissement (16, 30, 44) étant disposée après la deuxième fente de contre-collage.

2. Dispositif selon la revendication 1, **caractérisé en ce qu'**il est prévu :
- un dérouleur respectif (3, 4, 19, 21, 33, 35) pour dérouler au moins deux bandes métalliques (7, 8) pour fournir les tôles de recouvrement métalliques,
- au moins un dérouleur (5, 20, 34) pour dérouler au moins un film en plastique (6) pour fournir l'au moins une couche de plastique et
- des moyens (9, 10, 11, 23, 26, 36, 37, 39) pour préchauffer les au moins deux bandes métalliques (7, 8) et l'au moins un film en plastique (6) avant une première étape de contre-collage.

3. Dispositif selon la revendication 1, **caractérisé en ce qu'**il est prévu :
- au moins un dérouleur pour dérouler au moins une bande métallique pour fournir l'au moins une tôle de recouvrement métallique,
- au moins un dérouleur pour dérouler au moins une bande métallique avec un film en plastique appliqué au moins d'un côté par contre-collage,
- des moyens pour préchauffer l'au moins une bande métallique avec l'au moins un film en plastique appliqué au moins d'un côté par contre-collage et l'au moins une bande métallique avant la première étape de contre-collage pour former la tôle composite.

4. Dispositif selon la revendication 1, **caractérisé en ce qu'**il est prévu :
- à chaque fois un dérouleur (33, 35) pour dérouler au moins deux bandes métalliques pour fournir les tôles de recouvrement métalliques,
- au moins un dérouleur (34) pour dérouler au moins un film en plastique pour fournir l'au moins une couche de plastique,
- des moyens pour préchauffer (36, 37) l'au moins une bande métallique et l'au moins un film en plastique avant une étape d'application par contre-collage pour produire une bande métallique avec un film en plastique appliqué au moins d'un côté par contre-collage,
- dans la direction de processus après l'étape d'application par contre-collage, des moyens pour préchauffer (38, 39) l'au moins une bande métallique avec le film en plastique appliqué au moins d'un côté par contre-collage et une bande métallique au moins supplémentaire avant la première étape de contre-collage pour former la tôle composite.

5. Dispositif selon l'une quelconque des revendications 1 à 4, **caractérisé en ce qu'**il est prévu des moyens (15) pour chauffer les tôles de recouvrement métalliques de la tôle composite (2, 32, 45) après la première fente de contre-collage.

6. Dispositif selon l'une quelconque des revendications 1 à 5, **caractérisé en ce que** dans la première zone de chauffage (13, 26, 40) est prévu un tunnel de chauffage dans lequel la tôle composite (2, 32, 45) est chauffée à la température de contre-collage par radiation, induction et/ou convection.

7. Dispositif selon l'une quelconque des revendications 1 à 6, **caractérisé en ce que** la zone de refroidissement (16, 30, 44) est réalisée sous forme de presse à deux bandes, de section de refroidissement à air, de section de refroidissement à brume d'eau, de section de refroidissement à eau, ou de combinaison desdites sections de refroidissement.

8. Dispositif selon l'une quelconque des revendications 1 à 7, **caractérisé en ce que** des moyens de guidage de bande (22) pour les bandes métalliques sont prévus, avec lesquels celles-ci peuvent être guidées en vue du préchauffage à travers la première zone de chauffage (26) de la tôle composite (32) après la première fente de contre-collage.

9. Dispositif selon l'une quelconque des revendications 1 à 8, **caractérisé en ce que** les moyens (11, 23) pour le préchauffage du film en plastique sont disposés directement avant la fente de contre-collage du premier dispositif de contre-collage (12, 25).

10. Dispositif selon l'une quelconque des revendications 1 à 9, **caractérisé en ce que** dans la direction de processus avant la zone de refroidissement (30), au moins une zone de chauffage supplémentaire (28) est prévue avec un dispositif de contre-collage supplémentaire (29) disposé du côté de la sortie de la zone de chauffage supplémentaire (28), avec au moins deux rouleaux de contre-collage formant une fente de contre-collage.

11. Procédé de fabrication d'une tôle composite en forme de bande présentant au moins deux tôles de recouvrement métalliques et une couche de plastique disposée entre les tôles de recouvrement, comprenant les étapes de procédé suivantes :
- fourniture d'au moins deux bandes métalliques et d'au moins un film en plastique par des dérouleurs,
- préchauffage des bandes métalliques et du film en plastique avant que ceux-ci ne soient acheminés à un premier dispositif de contre-collage avec une fente de contre-collage formée par deux rouleaux de contre-collage,
- contre-collage des au moins deux bandes métalliques avec l'au moins un film en plastique disposé entre les bandes métalliques dans le premier dispositif de contre-collage pour former une tôle composite, en particulier en utilisant un dispositif selon l'une quelconque des revendications 1 à 10,
la tôle composite étant à nouveau chauffée après la première fente de contre-collage dans une première zone de chauffage à une température de contre-collage, étant soumise à une deuxième étape de contre-collage dans un deuxième dispositif de contre-collage qui présente au moins deux rouleaux de contre-collage formant une fente de contre-collage et étant refroidie dans une zone de refroidissement.

12. Procédé selon la revendication 11, **caractérisé en ce que** les tôles de recouvrement métalliques de la tôle composite sont chauffées par radiation après leur passage à travers la première fente de contre-collage.

13. Procédé selon la revendication 11 ou 12, **caractérisé en ce que** la tôle composite, après la deuxième étape de contre-collage, passe à travers au moins une zone de chauffage supplémentaire avec un dispositif de contre-collage supplémentaire disposé du côté de la sortie de la zone de chauffage supplémentaire, avant que la tôle composite ne soit refroidie dans la zone de refroidissement.

14. Procédé selon l'une quelconque des revendications 11 à 13, **caractérisé en ce que** les au moins deux bandes métalliques sont guidées en vue du préchauffage à travers la première zone de chauffage qui est prévue après la première fente de contre-collage et sont contre-collées dans la première fente de contre-collage pour former une tôle composite.

15. Procédé selon l'une quelconque des revendications 11 à 14, **caractérisé en ce que** l'au moins un film en plastique est chauffé directement avant son entrée dans la première fente de contre-collage par le biais de moyens de chauffage, de préférence à une température comprise entre 50°C et 150°C.
